# EUROPÄISCHE PATENTSCHRIFT

(11) **EP 1 374 985 B1**
(45) Veröffentlichungstag und Bekanntmachung des Hinweises auf die Patenterteilung: **25.07.2007**
(21) Anmeldenummer: 02722996.2
(22) Anmeldetag: 13.03.2002
(51) Int. Cl.: B01J 4/00, B01J 8/06

(54) **VERFAHREN UND VORRICHTUNG ZUM EINTRAGEN VON TEILCHEN IN EIN ROHR EINES ROHRREAKTORS**
METHOD AND DEVICE FOR LOADING PARTICLES IN A TUBE OF A TUBULAR REACTOR
PROCEDE DE CHARGEMENT DE PARTICULES DANS LE TUBE D'UN REACTEUR TUBULAIRE

(30) Priorität: 26.03.2001 RU 2001108156
(43) Veröffentlichungstag der Anmeldung: 02.01.2004
(73) Patentinhaber: INSTITUT KATALIZA IMENI G.K. BORESKOVA SIBIRSKOGO OTDELENIA ROSSIISKOI AKADEMII NAUK, Novosibirsk, 630090 (RU)
(72) Erfinder: KLENOV, Oleg Pavlovich, Novosibirsk, 630128 (RU); NOSKOV, Aleksandr Stepanovich, Novosibirsk, 630090 (RU)
(74) Vertreter: Goddar, Heinz J.
(86) Internationale Anmeldenummer: PCT/RU2002/000087
(87) Internationale Veröffentlichungsnummer: WO 2002/076598

(56) Entgegenhaltungen:
- EP-A- 0 041 144
- EP-A- 1 138 376
- EP-A1- 0 041 144
- WO-A-00/48723
- GB-A- 444 017
- GB-A- 1 522 893
- RU-C1- 2 140 321
- SU-A1- 1 479 090
- US-A- 5 247 970
- US-A- 5 626 455

## Beschreibung

Die Erfindung bezieht sich auf ein Verfahren und eine Anordnung, die zum Beschicken von vertikal angeordneten Rohren mit schüttbaren Materialien, insbesondere mit granulierten Teilchen, in Fällen bestimmt sind, wo besondere Anforderungen an eine Schüttschicht hinsichtlich der Homogenität der Schüttdichte in Höhenrichtung des Rohres, der Größe der mittleren Schüttdichte und dementsprechend der Größe des Strömungswiderstandes im Rohr gestellt werden, und kann bei der Bildung von Festbetten aus Katalysatorteilchen in Rohrreaktoren angewendet werden, die in der Chemieindustrie, der erdölverarbeitenden Industrie und in anderen Industriezweigen, beispielsweise in Reaktoren für primäres Reforming, weitgehend zur Verwendung kommen.

Zur Zeit wird beim Beschicken von vertikalen Rohren ein Verfahren breit angewendet, bei welchem Zwischenbehälter eingesetzt werden, die aus Gewebe oder Polyäthylen in Form von langgestreckten, auf einer Seite offenen Schläuchen ausgebildet sind. Die Behälter werden mit einzutragenden Teilchen gefüllt, wobei die Behälter so hergestellt werden, daß der Durchmesser der gefüllten Schläuche um 10 bis 20 mm den Rohrdurchmesser unterschreitet. Das offene Schlauchende wird umgebogen und der Behälter wird dann ins Rohr mit Hilfe eines Seils abgesenkt, das am anderen Ende des Behälters angebunden ist. Nachdem das untere Ende des Behälters die Oberfläche der eingefüllten Schicht erreicht hat, wird der Behälter heftig aufgerüttelt, so daß die einzubringenden Teilchen durch das offene Behälterende aus dem Behälter in die Schicht gelangen. (Catalyst Handbook. Ed. by Martin V. Twigg. Wolf Publishing Lmt. 2 Edit. 1989. p. 156-162). Dieses Verfahren garantiert die Unversehrtheit der eingetragenen Teilchen, aber die dabei anfallende Schicht kennzeichnet sich durch eine lockere und inhomogene Packung der Teilchen. Bei der Beschickung einer Vielzahl von Rohren, beispielsweise in Reaktoren für primäres Reforming, wird zur Anpassung von Parametern der Schichten in verschiedenen Rohren vielfach das Verfahren der mechanischen Schwingung des Rohres mit nachfolgender Messung des Strömungswiderstandes der Schicht angewendet. Nichtsdestoweniger wird durch dieses Verfahren die Erreichung eines positiven Endergebnisses, d.h. der Beschickung sämtlicher Rohre mit gleicher Schüttdichte und gleichem Strömungswiderstand, nicht sichergestellt, weil bei einer lockeren Packung der Teilchen kleine technologische Vibrationen der Rohre, z.B. bei der Montage von Flanschen oder beim Arbeiten, nicht umkehrbare Änderungen in der Struktur der Schicht hervorrufen, was zur Vergrößerung der Streuung des Strömungswiderstandes in verschiedenen Rohren und zur Verschlechterung der betriebs-wirtschaftlichen Kennziffern des Apparates führt.

Es ist eine Anordnung zur Beschickung eines vertikalen Rohres mit schüttbarem Material bekannt, bestehend aus einem Bunker mit im unteren Teil angebrachter offener Auslauföffnung und einem Horizontalbandförderer, der mit einem Elektroantrieb versehen ist und mit seinem einen Ende unter der genannten Auslauföffnung und mit seinem anderen Ende über einem in das zu beschickende Rohr einsetzbaren Trichter angeordnet ist (US-PS 5626455, 6.05.1997). Beim Eintragen gelangen die Teilchen aus dem Bunker auf das Förderband und treten dann über den Trichter in das Rohr ein, wo sie in die zu bildende Schicht frei fallen. Eine Änderung der Höhenlage des Bunkers über dem Förderband gestattet nach Auffassung der Erfinder, die Packungsdichte der Teilchen im Rohr durch Steuerung des Durchsatzes der aus dem Bunker auf das Förderband und weiter ins Rohr gelangenden Teilchen zu regeln. Nachteilig an dieser Anordnung ist, daß bei der Beschickung von langgestreckten Rohren mit über 2 m Höhe die Katalysatorteilchen beim freien Fall im Rohr zerstört werden können.

Bekannt ist eine Reihe von Verfahren und Anordnungen, die nach dem Hauptmerkmal ähnich sind - dem Verfahren der Teilchenförderung durch das Rohr in die eingefüllte Schicht, welches aus der Sicht der Teilchenzerstörung heraus ungefährlich ist. Bei jedem davon wird in ein leeres Rohr über dessen gesamte Höhe jeweils eine Vorrichtung abgesenkt, welche die Teilchen, die im Rohr unter Einwirkung der Gravitation fallen, durch Zusammenstöße mit den Elemenen der besagten Vorrichtung periodisch bremst. Die Teilchen werden dabei in Form eines Strahls ins Rohr eingeschüttet. Während der Füllung des Rohres mit den Teilchen wird die Vorrichtung aus dem Rohr gezogen. Gemäß US-PS 4077530, 7.03.1978 wird in das zu beschickende Rohr vor dem Beschickungvorgang über die gesamte Rohrhöhe ein auf eine bestimmte Weise verdrehter Draht abgesenkt, durch welchen die Teilchen beim Eintragen hindurchgeschüttet werden. Bei Zusammenstößen mit dem Draht werden die Teilchen gebremst und somit vor Zerstömg bewahrt.

In anderen, einander nach den Hauptmerkmalen ähnlichen Verfahren und Anordnungen wird in das zu beschickende Rohr vor dem Beschickungsvorgang ein Seil mit einem Satz von quer angeordneten Elementen abgesenkt, die in gleichem Abstand über die Seillänge befestigt und den Rohrquerschnitt maximal überdecken. Die genannten Elemente können in Gestalt von Platten (US-PS 3608751, 28.09.1971) oder in Form eines Satzes von radial angeordneten elastischen Drähtchen oder Spiralen mit einem Quermaß etwas kleiner als der Durchmesser des zu beschickenden Rohres ausgebildet sein (US-PS 5247970, 28.09.1993).

Die Qualität der Arbeit dieser Anordnung wird durch Steuerung der Lage und Hubgeschwindigkeit des genannten Seils mit dem Satz von quer angeordneten Elementen in hohem Maße beeinflußt. Bei Verspätung des Hubs kann das Seil durch die eingetragenen Teilchen zugeschüttet werden. Bei hoher Hubgeschwindigkeit nimmt die Höhe des freien Falls der Teilchen und die Wahrscheinlichkeit ihrer Zerstörung beim Kontakt mit anderen Teilchen zu. Eine Änderung der Höhe des freien Falls der Teilchen während des Beschickungsvorgangs, die bei dieser Anordnung nicht kontrolliert wird, führt zur Bildung von Schichtbereichen mit unterschiedlicher Schüttdichte und unterschiedlichem Strömungswiderstand. Außerdem weisen das genannte Verfahren und die genannte Anordnung Beschränkungen in bezug auf die Geschwindigkeit der Beschickung auf, d.h., eine Steigerung des Teilchendurchsatzes über 1.0 m³/h hinaus (Beschickung eines Rohres mit 100 mm Durchmesser und 4 m Höhe während 105 s) kann zum Durchschlüpfen der Teilchen durch die Bremselemente führen, welche nicht mehr die Zeit haben, die Ursprungsstellung anzunehmen. Dies führt zum Auftreten von Schichtbereichen mit unterschiedlicher Packungsdichte und kann auch die Zerstörung eines Teils der Teilchen bewirken.

Die Zahl der in ein Rohr abzusenkenden Seile kann auf drei vergrößert werden, wobei die genannten Elemente in Form von Kugeln ausgebildet werden können (WO 0044488 A1, 04.08.2000).

Nahe kommt dem beanspruchten Verfahren ein Verfahren zur Beschickung eines Rohrreaktor-Rohres mit Teilchen, bei welchem die Teilchen in einem kontinuierlichen Strahl dem zu beschickenden Rohr zugeführt werden, wo sie mit einer konstanten Geschwindigkeit, die für sämtliche Teilchen gleich ist, herunterfallen (EP 0041144 A1, 09.12.1981).

Aus der WO-A-00/48723 ist ein kontinuierliches Verfahren zum Transportieren von Partikeln bekannt, wobei Luft oder Gas als Transportmedium eingesetzt wird.

Aus der US-A-5 626 455 ist ein Verfahren und eine Anlage zum Beladen eines Reaktors mit Katalysatorteilchen bekannt, wobei die Fallgeschwindigkeit mittels Höhenregelung des Zufuhrkanals bestimmt wird.

Die GB-A-444017 beschreibt die Trocknung von Partikeln in einem Gasgegenstrom, dessen Geschwindigkeit den Partikeln angepaßt wird.

In der EP-A-041144 ist ein flexibler Schlauch für den Partikeltransport erwähnt, wobei allerdings keine Trommel verwendet wird.

Nachteile dieses Verfahrens sind der nicht hohe Grad der Sicherung der Teilchen gegen Zerstörung und die Inhomogenität der sich bildenden Schicht.

Die Aufgabe, auf deren Lösung die vorliegende Erfindung abzielt, besteht in der Beseitigung dieser Nachteile.

Das technische Ergebnis liegt in der Ermöglichung der Beschickung eines Rohres mit Teilchen unter Bildung einer in der Höhe homogenen und für alle zu beschickenden Rohre gleichen Schicht der Teilchen bei garantierter Sicherstellung ihrer Unversehrtheit während des Eintragens.

Das angegebene technische Ergebnis wird mit Hilfe des Verfahrens nach Anspruch 1 erzielt.

Dabei werden die Teilchen in einem kontinuierlichen Strahl dem zu beschickenden Rohr zugeführt, wo sie mit einer konstanten Geschwindigkeit, die für sämtliche Teilchen gleich ist, fallen, wobei die Fallgeschwindigkeit der Teilchen kleiner als die Geschwindigkeit ist, bei welcher die Teilchen infolge des Zusammenstoßes mit den Teilchen der zu bildenden Schicht zerstört werden können, und wobei die genannte Fallgeschwindigkeit der Teilchen im Rohr durch Bremsen mit einem Gasgegenstrom eingestellt wird.

Das Bremsen der Teichen durch den Gegenstrom wird dadurch bewerkstelligt, daß innerhalb des genannten Rohres ein flexibler Schlauch für die Gaszufuhr in dieses Rohr untergebracht wird, während das äußere Ende des genannten Schlauchs mit einer Druckgasquelle, die den Druckgaseintritt in das genannte Rohr des Rohrreaktors besorgt, verbunden wird, das Einschütten der genannten Teilchen ins Rohr wird in den Spalt zwischen der Wand des genannten Rohres und dem genannten Schlauch an dem letzteren entlang vorgenommen und je nach Füllung des genannten Rohres mit den Teilchen wird der Schlauch in eine Höhe gehoben, die der Menge der eingetragenen Teilchen direkt proportional ist.

Der beanspruchten Anordnung kommt am nächsten eine Anordnung zur Beschickung eines Rohrreaktor-Rohres mit Teilchen, die einen Aufnahmebunker aufweist (EP 0041144 A1, 09.12.1981).

Nachteilig bei dieser Anordnung ist die ungenügend hohe Effektivität und Geschwindigkeit der Beschickung.

Die Aufgabe, auf deren Lösung die vorliegende Erfindung abzielt, besteht in der Beseitigung dieser Nachteile.

Das technische Ergebnis der beanspruchten Anordnung liegt in der Ermöglichung einer effektiven und mit hoher Geschwindigkeit erfolgenden Beschickung eines Rohrreaktor-Rohres mit Teilchen.

Das angegebene technische Ergebnis wird mit Hilfe der Anordnung nach Anspruch 3 erzielt.

Der Austritt des Aufnahmebunkers ist mittels einer Rinne mit einem zu beschickenden Rohr verbunden, wobei die Anordnung mit einem auf eine drehbar um ihre Achse gelagerte Trommel aufgewickelten flexiblen Schlauch für die Zufuhr eines Gasstroms in das genannte Rohr, mit einem Antriebsmechanismus, der mit Möglichkeit ausgeführt ist, die genannte Trommel mit dem Schlauch in Umdrehungen zu versetzen, und mit einem Steuerungsblock für den Antriebsmechanismus zusätzlich ausgestattet ist, welcher entweder im automatischen Betrieb oder im Betrieb der Handbedienung funktionieren kann, wobei der genannte Schlauch an einem auf der Trommel befestigten Ende mit der Druckgasquelle verbunden ist.

Zur Steuerung des Hebens des genannten Schlauchs während der Beschickung kann die Anordnung mit verschiedenen Zusatzvorrichtungen versehen sein. Dies kann eine am Aufnahmebunker installierte elektronische Waage sein, die das Gewicht der Teilchen im genannten Bunker zu bestimmen gestattet und mit dem Steuerungsblock für den genannten Antriebsmechanismus so verbunden ist, daß je nach Austrag der Katalysatorteilchen ins Rohr und Abnahme des Gewichts der Teilchen im Bunker die genannte Waage ein Steuersignal in den Steuerungsblock zum Heben des genannten Schlauchs in eine Höhe sendet, die der Menge der eingetragenen Teilchen direkt proportional ist.

Dies kann ein Zähler für Teilchen sein, welche die Rinne passiert haben und ins Rohr einlaufen, beispielsweise ein lichtoptisches Paar, das an der Rinne angebracht ist; der genannte Teilchenzähler ist mit dem Steuerungsblock für den genannten Antriebsmechanismus so verbunden, daß je nach Durchgang einer bestimmten Teilchenmenge durch die Rinne der genannte Teilchenzähler ein Steuersignal in den Steuerungsblock zum Heben des genannten Schlauchs in eine Höhe sendet, die der Menge der eingetragenen Teilchen direkt proportional ist.

Dies kann auch ein mechanischer Volumen- oder Massendosierer für Teilchen sein, der an der Austrittsöffnung des Aufnahmebunkers angeordnet ist und die Möglichkeit hat, eine bestimmte gleiche Menge an genannten Teilchen abzumessen und in die Rinne und weiter ins Rohr auszugeben, wobei er gleichzeitig ein Steuersignal in den Steuerungsblock zum Heben des genannten Schlauchs in eine Höhe sendet, die der Menge der eingetragenen Teilchen direkt proportional ist.

Dies kann weiterhin ein Entfernungsmesser sein, beispielsweise ein optisches Laserentfernungsmeßgerät oder ein Ultraschallentfernungsmesser, der am unteren Ende des genannten, in das Rohr abzusenkenden Schlauchs angeordnet ist, den Abstand zwischen dem unteren Schlauchende und der oberen Fläche der ins Rohr einzufüllenden Teilchenschicht bestimmt und mit dem Steuerungsblock für den Antriebsmechanismus so verbunden ist, daß je nach Eintritt der Teilchen in die Schicht und Verkleinerung des Abstandes zwischen der oberen Schichtgrenze und dem genannten Entfernungsmesser der genannte Entfernungsmesser ein Steuersignal in den Steuerungsblock zum Heben des genannten Schlauchs in eine Höhe sendet, die der Menge der eingetragenen Teilchen direkt proportional ist.

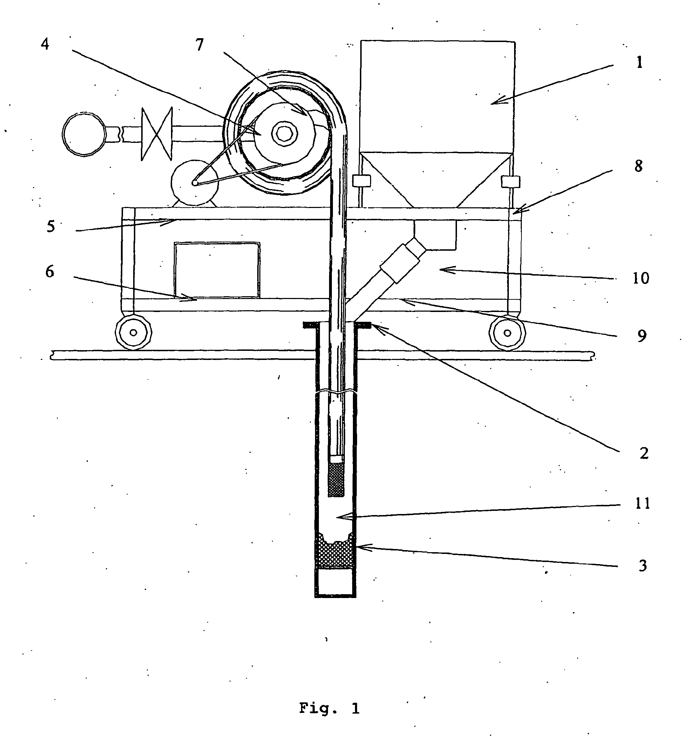

In Fig. 1 ist eine schematische Ansicht einer Anordnung zur Beschickung nach dem erfindungsgemäßen Verfahren und der erfindungsgemäßen Anordnung dargestellt.

Die Anordnung besteht aus einem Aufnahmebunker 1, der im unteren Teil mit dem einen Ende einer Rinne 2 verbunden ist, deren anderes Ende mit einem zu beschickenden Rohr 3 verbunden ist, einer Trommel 4, die mit einem mechanischen Antrieb 6 in Verbindung steht. Die Steuerung des genannten Antriebs erfolgt mittels eines Steuerungsblocks 6. Auf der Trommel 4 ist ein flexibler Schlauch 7 angeordnet, der auf der genannten Trommel mit einem Ende befestigt ist, das über ein Regelventil mit einer Druckgasquelle verbunden ist. Die Anordnung ist auch mit einer Zusatzvorrichtung bestückt, die das Heben des Schlauchs 7 während der Beschickung steuert. Dies kann entweder eine an dem Aufhahmebunker installierte elektronische Waage 8 oder ein an der Rinne angebrachter Teilchenzähler 9 oder ein zwischen Bunker und Rinne angeordneter mechanischer Dosierer 10 oder ein am Schlauchende befestigter Entfernungsmesser sein. Zur bequemeren Beschickung einer Vielzahl von Rohren kann die Anordnung auf einem ortsbeweglichen Wagen montiert sein.

Die zur Beschickung dienende Anordnung der vorstehend beschriebenen Bauart arbeitet folgendermaßen.

Vor Beginn der Beschickung senkt man den Schlauch 7 in das zu beschickende Rohr 3 ab und öffnet das Ventil, so daß das Gas von der Quelle beginnt, in den unteren Teil des Rohres einzuströmen und im Ringraum zwischen der Rohrwand und dem Schlauch aufzusteigen. Die Teilchen werden in den Aufnahmebunker 1 eingeschüttet, wonach sie über die Rinne 2 in das Rohr 3 gelangen, wo sie unter Einwirkung der Gravitation frei fallen und durch den Gasgegenstrom gebremst werden. Der Gasdurchsatz wird je nach Form, Größen und Material der Teilchen im Bereich von 5 bis 30 m/s gewählt. Die Menge der ins Rohr einlaufenden Teilchen wird entweder durch die elektronische Waage oder den Zeichenzähler oder den mechanischen Dosierer oder den elektronischen Entfernungsmesser registriert, welche ein Steuersignal an den Antriebsmechanismus abgeben, der den Schlauch aus dem Rohr in eine Höhe hebt, die der Menge der eingetragenen Teilchen direkt proportional ist.

Die Realisierbarkeit des Verfahrens wird durch ein konkretes Beispiel belegt.

Es sind zwei Serien Einbringungen eines Katalysators in Form von Raschig-Ringen mit den Abmessungen 14x12x3 mm vorgenommen worden. Die Katalysatorteilchen werden in ein vertikales Rohr von 96 mm Durchmesser und 4.0 m Höhe eingetragen. In jeder Serie sind 10 Überladungen des Katalysators ausgeführt worden.

In der ersten Serie wird der Katalysator nach der bekannten Methode unter Verwendung von Zwischenbehältern ins Rohr eingetragen, die aus Gewebe in Form von langgestreckten Schläuchen ("Strümpfen") mit 1.7 m Länge ausgebildet sind. Im Zuge von Experimenten bestimmt man die in der Schicht mittlere Schüttdichte und die Verteilung der Schüttdichte über die Höhe der Schicht für jede Einbringung. Die Größe der Schüttdichte der Schicht bestimmt man durch Wägung der Teilchen und Messung des eingenommenen Volumens (bei stufenweisem Austrag der Teilchen aus dem Rohr durch Unterdruckabsaugung). Die Größe der mittleren Schüttdichte für alle Überladungen des Katalysators betrug 0.497 t/m³ bei einer mittleren quadratischen Abweichung von 0.039 t/m³. Die Streuung von Werten liegt im Intervall von ± 4% der Durchschnittsgröße. Bei allen genannten Einbringungen kennzeichnete sich die Schicht durch lockere Packung mit hoher Streuung der Größe der Schüttdichte. Mechanische Einwirkungen, die leichte Schläge auf das Rohr und Vibrationen darstellten, riefen eine beträchtliche Schwindung der Schicht hervor - bis zu 10% der ursprünglichen Schichthöhe.

In der zweiten Serie wird der Katalysator unter Anwendung des beanspruchten Verfahrens und der beanspruchten Anordnung ins Rohr eingetragen. Als Druckgas wird Luft benutzt. Der Luftdurchsatz wird so eigestellt, daß die Fallgeschwindigkeit der Teilchen im Rohr der Geschwindigkeit des freien Falls der Teilchen aus der Höhe 0.3 m äquivalent ist. Die Größe der mittleren Schüttdichte für alle Überladungen des Katalysators betrug 0.61 t/m³ bei einer mittleren quadratischen Abweichung von 0.004 t/m³ für die mittlere Schüttdichte im ganzen Rohr. Die Streuung von Werten liegt im Intervall von ± 0.3% der Durchschnittsgröße. Die Messungen der lokalen Schüttdichte für 5 Abschnitte der Schicht mit je 0.75 m Höhe vorgenommen. Die Größe der mittleren quadratischen Abweichung betrug 0.006 t/m³, was die Streuung der Größe der lokalen Schüttdichte von ± 0,5 % des Mittelwertes in der Schicht bestimmte. Die mittlere Beschickungszeit beträgt 52 s, was eine Beschickungsgeschwindigkeit von 2.2 m³/h bestimmt. Bei allen genannten Einbringungen kennzeichnete sich die Schicht durch eine dichte Packung, die gegen mechanische und hydraulische Einwirkungen beständig ist. Schläge auf das Rohr und Vibrationen riefen eine unbedeutete Schwindung der Schicht hervor - höchstens 1.5 % der ursprünglichen Schichthöhe. Zerstörte Teilchen wurden bei Überladungen nicht festgestellt.

Die Anwendung des erfindungsgemäßen Verfahrens und der erfindungsgemäßen Anordnung zur Beschickung des vertikalen Rohres mit Teilchen erlaubt es, die Teilchen über die Höhe des zu beschickenden Rohres gleichmäßig zu verteilen. Dies ist dadurch bedingt, daß die Fallgeschwindigkeit der Teilchen im Rohr konstant und für jedes Teilchen während des gesamten Beschickungsvorgangs gleich ist. Dies bietet die Möglichkeit, eine Schüttschicht mit einer homohenen Struktur und einem gleichen Strömungswiderstand für eine beliebige Anzahl von zu beschickenden Rohren zu bilden. Die Verwendung der Anordnung schließt vollkommen die Wahrscheinlichkeit aus, daß der Schlauch durch die eingetragenen Teilchen zugeschüttet wird und daß die Teilchen zerstört werden, denn die Fallgeschwindigkeit der Teilchen im Rohr wird als ungefährlich für jeden betreffenden Teilchentyp durch Regelung des Durchsatzes der Luft gewählt, die das Fallen der Teilchen im Rohr bremst.

## Patentansprüche

1. Verfahren zur Beschickung eines Rohrreaktors mit Teilchen, bei dem die Teilchen in einem kontinuierlichen Strahl dem zu füllenden vertikalen Rohr zugeführt werden, wo sie mit einer Geschwindigkeit fallen, die kleiner als die Geschwindigkeit ist, bei welcher die Teilchen infolge des Zusammenstoßes mit den Teilchen der zu bildenden Schicht zerstört werden können, **dadurch gekennzeichnet, daß** bei einer für sämtliche Teilchen gleichen Fallgeschwindigkeit im vertikalen Rohr eine in der Höhe homogene und für alle zu beschickenden vertikalen Rohre gleiche Schicht der Teilchen erzeugt wird, und daß die genannte Fallgeschwindigkeit der Teilchen im vertikalen Rohr durch Bremsen mit einem Gasgegenstrom eingestellt wird, **dadurch** daß innerhalb des genannten vertikalen Rohres ein flexibler Schlauch für die Gaszufuhr in dieses vertikale Rohr untergebracht wird, wobei der flexible Schlauch in eine Höhe gehoben werden kann, die der Menge der eingetragenen Teilchen direkt proportional ist.

2. Verfahren zur Beschickung nach Anspruch 1, ***dadurch gekennzeichnet,* daß** das Bremsen der Teichen durch den Gegenstrom **dadurch** bewerkstelligt wird, daß innerhalb des genannten Rohres ein flexibler Schlauch für die Gaszufuhr in dieses Rohr untergebracht wird, während das äußere Ende des genannten Schlauchs mit einer Druckgasquelle, die den Druckgaseintritt in das genannte Rohr des Rohrreaktors besorgt, verbunden wird, das Einschütten der genannten Teilchen ins Rohr in den Spalt zwischen der Wand des genannten Rohres und dem genannten Schlauch an dem letzteren entlang vorgenommen wird und je nach Füllung des genannen Rohres mit den Teilchen der Schlauch in eine Höhe gehoben wird, die der Menge der eingetragenen Teilchen direkt proportional ist.

3. Anordnung zur Beschickung eines Rohreaktors mit Teilchen, enthaltend einen Aufnahmebunker und einen flexiblen Schlauch, **dadurch gekennzeichnet, daß** der Austritt des Aufnahmebunkers mittels einer Rinne mit einem zu füllenden vertikalen Rohr verbunden ist, wobei die Anordnung mit einer drehbar um ihre Achse gelagerten Trommel, auf der ein flexibler Schlauch für die Zufuhr eines Gasstroms in das genannte vertikale Rohr angeordnet ist, einem Antriebsmechanismus für die Trommel und einem Steuerungsblock für den Antriebsmechanismus, der im automatischen Betrieb oder im Handbetrieb funktioniert, zusätzlich ausgestattet ist, wobei der genannte flexible Schlauch an einem auf der Trommel befestigten Ende mit einer Druckgasquelle verbunden ist, an dem anderen aber unter Belassung eines für einen freien Durchgang der Teilchen hinreichenden Spaltes in das zu füllende vertikale Rohr abgesenkt ist.

4. Anordnung nach Anspruch 3, ***dadurch gekennzeichnet,* daß** der Aufnahmebunker mit einer elektronischen Waage versehen ist, die mit Möglichkeit ausgeführt ist, das Gewicht der Teilchen im genannten Bunker zu bestimmen, und die mit dem Steuerungsblock für den genannten Antriebsmechanismus so verbunden ist, daß je nach Austrag der Katalysatorteilchen ins Rohr und Abnahme des Gewichts der Teilchen im Bunker die genannte elektronische Waage ein Steuersignal in den Steuerungsblock zum Heben des genannten Schlauchs in eine Höhe sendet, die der Menge der eingetragenen Teilchen direkt proportional ist

5. Anordnung nach Anspruch 3, ***dadurch gekennzeichnet,* daß** die Rinne mit einem Zähler für Teilchen, welche die Rinne passiert haben, versehen ist, wobei der Teilchenzähler mit.dem Steuerungsblock für den Antriebsmechanismus so verbunden ist, daß er je nach Durchgang der Teilchen durch die Rinne ein Steuersignal in den Steuerungsblock zum Heben des genannten Schlauchs in eine Höhe senden kann, die der Menge der eingetragenen Teilchen direkt proportional ist.

6. Anordnung nach Anspruch 3, ***dadurch gekennzeichnet,* daß** sie mit einem Teilchendosierer versehen ist, der am Austritt des Aufnahmebunkers mit Möglichkeit angeordnet ist, eine gleiche Teilchenmenge abzumessen und in die Rinne auszugeben, wobei er gleichzeitig ein Steuersignal in den Steuerungsblock für den Antriebsmechanismus zum Heben des genannten Schlauchs in eine Höhe sendet, die der Menge der eingetragenen Teilchen direkt proportional ist.

7. Anordnung nach Anspruch 3, ***dadurch gekennzeichnet,* daß** das untere Ende des in das genannte Rohr abzusenkenden Schlauchs mit einem Entfernungsmesser versehen ist, der den Abstand zwischen dem unteren Schlauchende und der oberen Fläche der ins Rohr eingefüllten Teilchenschicht bestimmt und mit dem Steuerungsblock für den Antriebsmechanismus so verbunden ist, daß je nach Eintritt der Teilchen in die Schicht der genannte Entfernungsmesser ein Steuersignal in den Steuerungsblock zum Heben des genannten Schlauchs in eine Höhe sendet, die der Menge der eingetragenen Teilchen direkt proportional ist.

## Claims

1. Method for charging a tubular reactor with particles, in which the particles are supplied in a continuous stream to the vertical tube to be filled, where they fall at a rate which is less than the rate at which the particles can be destroyed as a result of the collision with the particles of the layer to be formed, **characterized in that**, at a falling rate in the vertical tube that is the same for all the particles, a layer of the particles that is homogeneous in height and the same for all the vertical tubes to be charged is created, and **in that** the said falling rate of the particles in the vertical tube is set by slowing them down with a gas countercurrent, by providing inside the said vertical tube a flexible hose for the gas supply into this vertical tube, it being possible for the flexible hose to be raised to a height which is directly proportional to the amount of particles introduced.

2. Charging method according to Claim 1, **characterized in that** the slowing down of the particles by the countercurrent is accomplished by providing inside the said tube a flexible hose for the gas supply into this tube, while the outer end of the said hose is connected to a compressed gas source, which provides for the introduction of compressed gas into the said tube of the tubular reactor, the falling of the said particles into the tube is performed into the gap between the wall of the said tube and the said hose along the latter and, depending on the filling of the said tube with the particles, the hose is raised to a height which is directly proportional to the amount of particles introduced.

3. Arrangement for charging a tubular reactor with particles, comprising a receiving bunker and a flexible hose, **characterized in that** the outlet of the receiving bunker is connected by means of a channel to a vertical tube to be filled, the arrangement being additionally equipped with a drum, which is mounted rotatably about its axis and on which a flexible hose for the supply of a gas stream into the said vertical tube is arranged, a drive mechanism for the drum and a control block for the drive mechanism, which operates in automatic mode or in manual mode, the said flexible hose being connected at one end, which is fastened on the drum, to a compressed gas source, but at the other end is lowered into the vertical tube to be filled, while leaving a gap sufficient for the particles to pass freely through.

4. Arrangement according to Claim 3, **characterized in that** the receiving bunker is provided with an electronic balance, which is equipped with means for determining the weight of the particles in the said bunker, and which is connected to the control block for the said drive mechanism in such a way that, depending on the discharge of the catalyst particles into the tube and the reduction in weight of the particles in the bunker, said electronic balance sends a control signal into the control block for raising the said hose to a height which is directly proportional to the amount of particles introduced.

5. Arrangement according to Claim 3, **characterized in that** the channel is provided with a counter for particles which have passed the channel, the particle counter being connected to the control block for the drive mechanism in such a way that, depending on the passage of particles through the channel, it can send a control signal into the control block for raising the said hose to a height which is directly proportional to the amount of particles introduced.

6. Arrangement according to Claim 3, **characterized in that** it is provided with a particle metering unit, which is arranged at the outlet of the receiving bunker with means for measuring an equal amount of particles and discharging them into the channel, it at the same time sending a control signal into the control block for the drive mechanism for raising the said hose to a height which is directly proportional to the amount of particles introduced.

7. Arrangement according to Claim 3, **characterized in that** the lower end of the hose to be lowered into the said tube is provided with a distance meter, which determines the distance between the lower end of the hose and the upper surface of the layer of particles filled into the tube and is connected to the control block for the drive mechanism in such a way that, depending on the introduction of the particles into the layer, the said distance meter sends a control signal into the control block for raising the said hose to a height which is directly proportional to the amount of particles introduced.

## Revendications

1. Procédé de chargement d'un réacteur tubulaire en particules, dans lequel les particules sont amenées en un jet continu au tube vertical à remplir, où elles tombent à une vitesse inférieure à la vitesse à laquelle les particules risquent d'être détruites par suite de l'impact avec les particules de la couche à former, **caractérisé en ce que**, pour une vitesse de chute identique pour l'ensemble des particules, dans le tube vertical une couche, homogène en hauteur et identique pour tous les tubes verticaux à charger, des particules est produite, et **en ce que** ladite vitesse de chute des particules dans le tube vertical est réglée par freinage avec un écoulement à contrecourant de gaz, **caractérisé en ce qu'**à l'intérieur dudit tube vertical est logé un tuyau flexible pour l'amenée de gaz dans ce tube vertical, sachant que le tuyau flexible est levé à une hauteur qui est directement proportionnelle à la quantité des particules introduites.

2. Procédé de chargement selon la revendication 1, **caractérisé en ce que** le freinage des particules est effectué par le contrecourant, par le fait qu'à l'intérieur du tube cité est logé un tuyau flexible pour l'apport de gaz dans ce tube, tandis que l'extrémité extérieure du tuyau cité est reliée à une source de gaz sous pression qui alimente l'entrée de gaz sous pression dans ledit tube du réacteur tubulaire, l'introduction en vrac desdites particules dans le tube étant effectuée dans l'intervalle existant entre la paroi dudit tube et ledit tuyau, le long de ce dernier et, selon le degré de remplissage dudit tube en particules, le tuyau est levé à une hauteur directement proportionnelle à la quantité des particules introduites.

3. Dispositif de chargement d'un réacteur tubulaire en particules, contenant une trémie de réception et un tuyau flexible, **caractérisé en ce que** la sortie de la trémie de réception est reliée, au moyen d'une goulotte, à un tube vertical à remplir, sachant que le dispositif est en plus équipé d'un tambour monté à rotation autour de son axe, tambour sur lequel un tuyau flexible, prévu pour l'amenée d'un flux de gaz, est disposé dans ledit tube vertical, un mécanisme d'entraînement pour le tambour et un bloc de commande pour le mécanisme d'entraînement qui fonctionne en fonctionnement automatique ou en fonctionnement manuel, sachant que ledit tuyau flexible est relié, a une extrémité fixée sur le tambour, à une source de gaz sous pression, cependant, à l'autre extrémité, est descendu dans le tube vertical à remplir, en laissant un intervalle suffisant pour permettre un passage libre des particules.

4. Dispositif selon la revendication 3, **caractérisé en ce que** la trémie de réception est reliée à une balance électronique, réalisée avec possibilité de déterminer le poids des particules dans ladite trémie, et la balance étant reliée au bloc de commande pour ledit mécanisme d'entraînement, de manière que, selon le débit de sortie de particules de catalyseur dans le tube et la diminution de poids des particules dans la trémie, ladite balance électronique envoie un signal de commande dans le bloc de commande, dans le but de lever ledit tuyau à une hauteur qui est directement proportionnelle à la quantité des particules introduites.

5. Dispositif selon la revendication 3, **caractérisé en ce que** la goulotte est munie d'un compteur pour compter les particules qui sont passées par la goulotte, sachant que le compteur à particules est relié au bloc de commande pour le mécanisme d'entraînement, de manière que, selon le passage des particules à travers la goulotte, un signal de commande puisse être envoyé dans le bloc de commande, pour lever ledit tuyau à une hauteur qui est directement proportionnelle à la quantité de particules introduites.

6. Dispositif selon la revendication 3, **caractérisé en ce qu'**il est muni d'un doseur de particules disposé à la sortie de la trémie de réception, avec possibilité de mesurer une quantité identique de particules et de la fournir à la goulotte, sachant qu'il envoie simultanément un signal de commande dans le bloc de commande pour le mécanisme d'entraînement servant à lever ledit tuyau à une hauteur directement proportionnelle à la quantité des particules introduites.

7. Dispositif selon la revendication 3, **caractérisé en ce que** l'extrémité inférieure du tuyau à descendre dans ledit tube est munie d'un télémètre, déterminant l'espacement entre l'extrémité de tuyau inférieure et la surface supérieure de la couche de particules introduite dans le tube, et relié au bloc de commande pour le mécanisme d'entraînement, de manière que, après entrée des particules dans la couche, ledit télémètre envoie un signal de commande dans le bloc de commande, pour lever ledit tuyau à une hauteur directement proportionnelle à la quantité des particules introduites.
